Europäisches Patentamt

(19) European Patent Office

Office européen des brevets

(11) Publication number: **0 009 850**
**B1**

(12) **EUROPEAN PATENT SPECIFICATION**

(45) Date of publication of patent specification: 28.04.82

(21) Application number: 79200556.3

(22) Date of filing: 01.10.79

(51) Int. Cl.³: **B 30 B 9/30, A 01 F 15/00, B 30 B 11/24**

(54) A device for compressing fibre material, in particular dried green fodder, into bales.

(30) Priority: 02.10.78 NL 7809933

(43) Date of publication of application:
16.04.80 Bulletin 80/8

(45) Publication of the grant of the patent:
28.04.82 Bulletin 82/17

(84) Designated Contracting States:
BE CH DE FR GB NL

(56) References cited:
DE - A - 2 048 440
FR - A - 2 305 099
US - A - 2 013 026

(73) Proprietor: INSTITUUT VOOR BEWARING EN VERWERKING VAN LANDBOUWPRODUKTEN
Bornsesteeg 59 P.O. Box 18
NL-6700 AA Wageningen (NL)

(72) Inventor: Robben, Johan Bernard Hendrik
Holthuizerdreef 23
Huissen (NL)
Inventor: Leutscher, Hendrik Jacob
Edeseweg 129
Bennekom (NL)
Inventor: Ogink, Johannes Joseph Maria
Gruttoweide 30
Wageningen (NL)

(74) Representative: van der Beek, George Frans et al,
Nederlandsch Octrooibureau Johan de Wittlaan 15 P.O. Box 29720
NL-2502 LS Den Haag (NL)

Courier Press, Leamington Spa, England.

## A device for compressing fibre material, in particular dried green fodder, into bales

The invention relates to a device for compressing fibre material, in particular dried green fodder, into bales, including a material feed debouching into a compression channel in which a compression means may be operated, said compression means having the form of a rotatable compression screw conveyor.

The main part of the dried green fodders intended to be fed to ruminants is ground, compressed and formed to rodlike pieces, cubes or chips. The high density and good manageability thereof are considered to be practical advantages. It is well known that the digestive organs, particularly the rumen of the ruminant will only function properly if at least part of the fodder ration consists of particles having a fibrous structure, i.e. having relatively large length and thickness dimensions. It will be clear that the above-mentioned pieces consisting of ground particles do not have such a structure. The ground and compressed rodlike pieces, cubes or chips entail the further drawback of requiring rather much energy for the production thereof.

Although bales having the structure of particles may be obtained by using a known baler for compressing unground dried green fodder such bales have a relatively low density (for instance about 250 kg/m³) thus requiring much room when stored and transported. An increase of the density would however be conducive to the obtainment of a product compressed to such a degree that a ruminant will not be able to loosen the material whereas there would also be created considerable problems in technical respect.

An object of the invention is to provide a device of the type mentioned above by means of which bales having a considerably higher density (for instance about 500 kg/m³) may be compression formed while retaining the structure so that a ruminant will nevertheless be able to loosen the material from the bale in an easy manner.

According to the invention the discharge end of the screw blade of the compression screw terminates in a plane perpendicular to the axis of the screw and having the shape of a sector of a circle, said plane extending over an angle of at least 15° and being preceded by a part of the screw blade having a gradually increasing thickness, and that a back pressure means is arranged in the compression channel to exert back pressure on the fibre material to be conveyed by the compression screw.

The invention is based on the recognition that when imparting a planar surface to the end of the screw without changing the distance between the last turn of the screw and the last but one turn the fibres will be oriented in planes perpendicular to the axis of the screw and that consequently a much higher density may be imparted to the bales without increasing the coherence between the parts too much. Such an orientation of the fibres in parallel planes perpendicular to the direction of compression entails moreover that the expelling of air will be better.

This advantageous effect is obtained only if on the fibre material a certain back pressure is exerted. This back pressure can be generated by the friction between the material and the walls of the compression channel. This would mean that in that part of the bale that has been compressed firstly the density would be not as high as the density in the subsequently compressed portion.

Therefore, to obtain a constant density, it is preferred that the back pressure means includes a back pressure plate capable of being moved back and forth, and being alignment with the screw and cooperating with a control mechanism decreasing the back pressure exerted by said plate in dependence upon the force exerted on the screw or upon the displacement of the back pressure plate in the direction away from the end of the screw.

By means of such a device the sum total of the back pressure caused by the friction between the material to be compressed and the walls of the housing, and the back pressure caused by the back pressure plate may be kept rather closely constant so that the density over the length of the bale remains the same.

The back pressure plate is for instance connected to a hydraulic piston-cylinder assembly having an oil feed line in which a valve has been provided which is controlled by a feeler for ascertaining the position of the piston within the cylinder.

For an appropriate discharge of the formed bales there will be provided downstream of the discharge end of the screw and adjoining the compression channel an ejection means and a knife movable in a direction transversely to the axis of the screw.

The invention will now further be described in detail with reference to the drawings representing an embodiment of the invention.

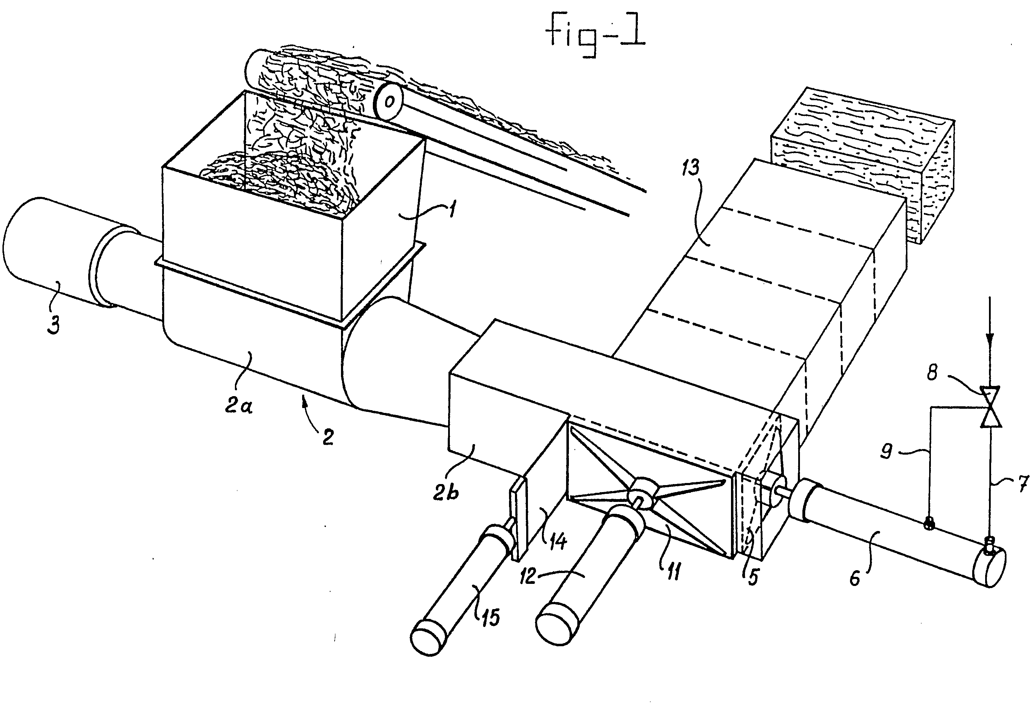

Fig. 1 represents a perspective view of the device.

Fig. 2 represents a longitudinal section.

The shown device is intended for the compression of dried unground green fodder into bales having a relatively high density (about 500 kg/m³).

The device includes a feed bin 1 the bottom part of which debouches into a compression channel 2. Within a portion 2a of this channel there has been provided a compression screw conveyor 4 driven by a hydromotor 3. Within this portion 2a the housing of the compression channel 2 constitutes a close encasement of the screw 4. On the inner surface of the portion 2a of the housing there have been mounted helical ribbons 18. These ribbons have a winding running opposite to the blade of the screw 4. At the location at which each ribbon 18 intersects the compression screw 4 the angle between the side of the ribbon facing the discharge end of the compression channel 2 and the screw 4 will be at least 90°. The ribbons 18 assure that the fibre material to be compressed within the compression channel will not rotate. As a consequence of the said angle of at least 90° the fibre material will not be cut or shredded. Approximately at the level of the end of the screw the cross sectional shape of the channel 2 changes from a circular shape portion (2a) to a rectangular shape portion (2b).

Within the portion 2b of the housing there has been provided a back pressure plate 5 that may be moved back and forth along the axis of the screw 4 by means of a hydraulic cylinder 6. With said cylinder there has been connected an oil feed line 7 having mounted therein a valve 8. This valve is controlled by a feeler for ascertaining the position of the piston within the cylinder 6. The connection between the feeler and the valve 8 has been indicated by the reference numeral 9.

Part of the vertical side wall of the rectangular portion 2b of the channel 2 is constituted by an ejection plate 11 which has been connected to an ejection cylinder 12. Adjoining the side wall opposite to the plate 11 there is a discharge channel 13. Next to said cylinder 12 at the side facing the screw 4 there has been provided a knife 14 connected with a hydraulic cylinder 15.

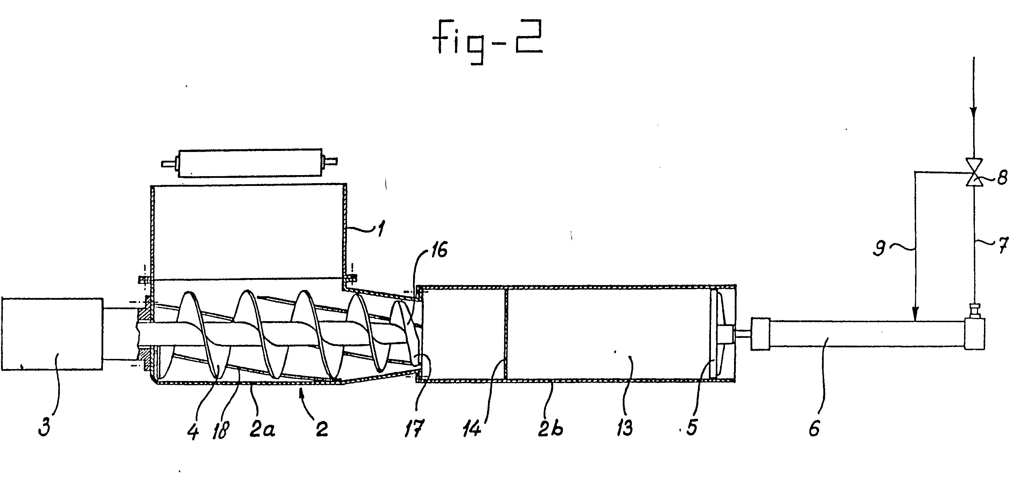

As will be apparent from fig. 2 in particular the end of the screw 4 tapers conically somewhat, whereas the last term of the blade possesses a gradually thickened end portion 16 (over about 180°) merging into a plane 17 perpendicular to the axis of the screw and having the shape of a sector of a circle. The latter planar surface 17 extends over about 30° (at least 15°). The distance between the last turn provided with the thickened blade portion and the last but one turn is constant i.e. the thickened end portion becomes gradually thicker in the direction of the discharge end of the screw. In cooperation with the adapted form of the portion 2a the conical end portion of the screw assures a certain densification upon conveying the green fodder through this portion of the compression channel 2. As a consequence of the thickened end portion 16 and the planar end surface 17 the green fodder particles are oriented in planes perpendicular to the axis of the screw. The sheathlike stems are pressed so that the air is expelled from the stems.

The thus oriented material is pressed against the back pressure plate 5. On exceeding a force exerted by the cylinder 6 the plate 5 will gradually be pushed aside. The friction exerted by the walls of the rectangular portion 2b of the compression channel on the green fodder causes likewise a back pressure with respect to the pressure exerted by the screw 4. This friction back pressure increases upon the increase of the amount of material in the rectangular portion of the compression channel. The aim is to maintain a constant sum total of the back pressure exerted on the one hand by the back pressure plate 5 and on the other hand by the walls of the rectangular compression channel 2. Since the frictional forces are gradually increasing, the cylinder 6 will have to exert a gradually decreasing back pressure upon displacement of the back pressure plate 5. In the shown embodiment this is attained by controlling the valve 8 in the oil line 7 to the cylinder 6 in dependence upon the position of the piston in the cylinder 6. By way of example it has been indicated that in case of a compression channel portion 2b having a sectional dimension of 28 × 28 cm the back force exerted by the plate 5 decreases from 9000 N to 5000 N.

Since the sum total of the back pressure is substantially constant over the entire displacement range of the back pressure cylinder the density of the material in the compressed bale will not vary either. In view of the orientation of the green fodder particles in planes perpendicular to the axis of the compression chamber the air may easily be discharged from the stems and the bales when compressing the same. The density may be extremely high (for instance about 500 kg/m$^3$) without reaching too strong a coherence between the parts thereof.

Likewise the uniformity of the density contributes to the high value of the density that may be chosen without causing difficulties for a ruminant when loosening the material from a bale.

At a density of about 500 kg/m$^3$ a 20 kg bale may easily be handled in view of the small dimensions thereof (for instance 2.8 dm × 2.8 dm × 5 dm). The storage and transportation costs will be relatively low. The uniformity of the density moreover contributes to the stability of a stack of bales.

In a more accurate construction for maintaining a constant sum total of the back pressure the force exerted on the compression screw 4 is measured (for instance by means of strain gauges) while a control mechanism for the back pressure means is controlled by a signal corresponding to said force in such a manner that the back pressure exerted by the back pressure means decreases and the sum total of the back pressure remains constant.

When the back pressure plate 5 has reached its final position the screw 4 is stopped whereupon the knife 14 is pushed forth by the cylinder 15 and the bale thus cut off is pushed by the ejection plate 11 by means of the cylinder 12 into the discharge channel 13. After the return of the ejection plate 11, the back pressure plate 5 and the knife 14 to their original positions the screw 4 is again put into operation.

Usually the bales will be wrapped in a plastic foil.

The bale remains compressed in the channel 13 until completely enveloped by the wrapping: the wrapping thus keeps the material in a compressed condition.

An additional advantage of the disclosed device resides in the fact that the compression density may be regulated continuously and may be adapted in a certain degree to the nature of the product. The far most important effect of the invention is however that without grinding the freen fodder a high density may be attained whereas the coherence of the material is nevertheless not too strong.

## Claims

1. A device for compressing fibre material, in particular dried green fodder, into bales, including a material feed debouching into a compression channel in which a compression means may be operated said compression means having the form of a rotatable compression screw conveyor, characterized in, that the discharge end of the screw blade of the compression screw (4) terminates in a plane (17) perpendicular to the axis of the screw and having the shape of a sector of a circle, said plane (17) extending over an angle of at least 15° and being preceded by a part (16) of the screw blade having a gradually increasing thickness, and that a back pressure means is arranged in the compression channel (2) to exert back pressure on the fibre material to be conveyed by the compression screw (4).

2. The device of claim 1, characterized in, that the back pressure means includes a back pressure plate (5) capable of being moved back and forth and being in alignment with the screw (4) and cooperating with a control mechanism decreasing the back pressure exerted by said plate in dependence upon the force exerted on the screw or upon the displacement of the back pressure plate (5) in the direction away from the end of the screw (4).

3. The device of claim 2, characterized in, that the back pressure plate (5) is connected to a hydraulic piston-cylinder assembly (6) having an oil feed line (7) in which a valve (8) has been provided, said valve being controlled by a feeler for ascertaining the position of the piston within the cylinder (6).

4. The device of one of the preceding claims, characterized in, that downstream of the discharge end of the screw (4) and adjoining the compression channel (2) there have been provided an ejection means (11) and a knife (14) movable in a direction transversely to the axis of the screw (4).

## Revendications

1. Un dispositif pour comprimer de la matière fibreuse, en particulier du fourrage vert séché, en balles, comprenant une alimentation de matière débouchant dans un canal de compression dans lequel des moyens de compression peuvent être mis en action, ces moyens de compression ayant la forme d'un transporteur à vis de compression tournante, caractérisé en ce que l'extrémité de déchargement du filet de la vis de compression (4) se termine dans un plan (17) perpendiculaire à l'axe de la vis et ayant la forme d'un secteur de cercle, ce plan (17) s'étendant sur un angle d'au moins 15° et étant précédé d'une partie (16) du filet ayant une épaisseur progressivement croissante, et en ce que des moyens de contre-pression sont agencés dans le canal de compression (2) pour exercer une contre-pression sur la matière fibreuse qui doit être transportée par la vis de compression (4).

2. Le dispositif de la revendication 1, caractérisé en ce que les moyens de contre-pression comprennent une plaque de contre-pression (5) capable d'être déplacée vers l'arrière et vers l'avant, située dans l'alignement de la vis (4) et coopérant avec un mécanisme de commande qui diminue la contre-pression exercée par ladite plaque en fonction de la force exercée sur la vis ou du déplacement de la plaque de contre-pression (5) dans le sens qui s'éloigne de l'extrémité de la vis (4).

3. Le dispositif de la revendication 2, caractérisé en ce que la plaque de contre-pression (5) est reliée à un ensemble hydraulique (6) piston-cylindre ayant une ligne d'arrivée d'huile (7) dans laquelle un obturateur (8) a été prévu, cet obturateur étant commandé par un capteur servant à déterminer la position du piston dans le cylindre (6).

4. Le dispositif de l'une des revendications précédentes, caractérisé en ce que, en aval de l'extrémité de déchargement de la vis (4) et dans la région adjacente au canal de compression (2), il a été prévu des moyens d'éjection (11) et un couteau (14) pouvant se déplacer dans une direction transversale à l'axe de la vis (4).

## Patentansprüche

1. Vorrichtung zum Pressen von Fasergut, insbesondere von getrocknetem Grünfutter, zu Ballen, mit einer Gutzufuhr, die in einen Preßdurchgang austrägt, in welchem eine Preßeinrichtung in Form eines drehbaren Preß-Schnekkenförderer antreibbar ist, dadurch gekennzeichnet, daß das Austragende der Schneckenfläche der Preß-Schnecke (4) in einer senkrecht zur Schneckenachse liegenden. die Form eines Kreisausschnittes besitzende Ebene (17) endet, die sich über einen Winkel von mindestens 15° erstreckt und der ein Teil (16) der Schneckenfläche mit allmählich zunehmender Dicke vorausgeht, und daß im Preßdurchgang (2) eine Gegendruckeinrichtung angeordnet ist, die auf das durch die Preß-Schnecke (4) zu fördernde Fasergut einen Gegendruck ausübt.

2. Vorrichtung nach Anspruch 1, dadurch gekennzeichnet, daß die Gegendruckeinrichtung eine Gegendruckplatte (5) aufweist, die vor und zurück bewegbar ist, mit der Schnecke (4) fluchtet und mit einem Steuermechanismus zusammenwirkt, welcher den durch diese Platte ausgeübten Gegendruck in Abhängigkeit von der auf die Schnecke einwirkenden Kraft oder von der Verschiebung der Gegendruckplatte (5) in einer Richtung vom Ende der Schnecke (4) hinweg verringert.

3. Vorrichtung nach Anspruch 2, dadurch gekennzeichnet, daß die Gegendruckplatte (5) mit einer hydraulischen Kolben-Zylinderanordnung (6) verbunden ist, die eine Ölzufuhrleitung (7) aufweist, in die ein Ventil (8) eingeschaltet ist, und daß das Ventil durch einen Fühler zur Bestimmung der Stellung des Kolbens im Zylinder (6) steuerbar ist.

4. Vorrichtung nach einem der vorangehenden Ansprüche, dadurch gekennzeichnet, daß in Förderrichtung hinter dem Austragende der Schnecke (4) und im Anschluß an den Preßdurchgang (2) eine Ausstoßeinrichtung (11) und ein in einer Richtung quer zur Achse der Schnecke (4) bewegbares Messer (14) angeordnet sind.

fig-1

Fig-2